# EUROPEAN PATENT APPLICATION

(11) **EP 2 070 723 A1**
(43) Date of publication of application: **17.06.2009**
(21) Application number: 07807881.3
(22) Date of filing: 26.09.2007
(51) Int. Cl.: B44C 1/17, B29C 45/14, B32B 27/36, B29L 9/00

(54) **DECORATIVE SHEET**

(30) Priority: 28.09.2006 JP 2006265269
(71) Applicant: Dai Nippon Printing Co., Ltd., Tokyo 162-8001 (JP)
(72) Inventor: MEIKI, Yoshiyuki, Tokyo 162-8001 (JP); ATAKE, Hiroyuki, Tokyo 162-8001 (JP); OOTA, Kenji, Tokyo 162-8001 (JP)
(74) Representative: Gille Hrabal Struck Neidlein Prop Roos
(86) International application number: PCT/JP2007/068666
(87) International publication number: WO 2008/038659

(57) **Abstract**

Provided is a sheet for decoration which is excellent in an impact resistance in molding a surface form having a three-dimensional curved surface having a high deep-drawing degree and which has a good followability toward a molding surface of a metal die and is suited to decorated moldings. The above sheet for decoration comprises a peel layer, a picture layer and a heat adhesive resin layer which are laminated in order on the surface of a base film comprising a polyester film, wherein a dynamic elastic modulus of the above base film is 1.0 × 10⁶ Pa or more at any temperature falling in a range of 190 to 240°C.

## Description

### BACKGROUND OF THE INVENTION

The present invention relates to a sheet for decoration used for decorated moldings prepared by injection molding.

### RELATED ART

A decorating injection molding method has so far been used for decorating resin moldings having a complicated surface form such as a three-dimensional curved surface and the like. The decorating injection molding method is a method in which a sheet for decoration inserted into a metal die in injection molding is integrated with a molten injection resin injected into a cavity to decorate the surface of a resin molding. In general, it is classified roughly into a laminate decorating injection molding method and a transfer decorating injection molding method according to a difference in the constitution of a sheet for decoration integrated with a resin molding.
In the transfer decorating injection molding method, a transfer layer side of a sheet for decoration for transfer decorating injection molding is turned to an inside of a metal die and heated from the transfer layer side by a hot plate to carry out molding so that the above sheet for decoration fits a shape in an inside of the metal die to thereby bring the sheet for decoration into close contact with the inner face of the metal die, and the metal die is clamped. Next, a decorated molding is taken out from the metal die after cooled down, and then the base film is peeled, whereby the decorated molding on which the transfer layer is transferred can be obtained.

The decorated moldings thus obtained have so far been used in various fields such as household electric appliances, car interior products and the like, and in recent years, articles having a surface form of a three-dimensional curved surface which have more complicated shapes and a high deep-drawing degree (larger elongation rate of a sheet for decoration) tend to be desired as the tastes of consumers are diversified. In order to meet the requirement described above, proposed are a sheet for decoration prepared by using a material which has a yield point and in which a stress value subsequent to the yield point is a fixed value or more (for example, a patent document 1) and a sheet for decoration for molding constituted from two or more laminate films in which a transparent acryl film is laminated on the film at a side adhered to a molding resin and in which pictures are formed between the film at the side adhered to the molding resin and the acryl film (for example, a patent document 2). However, when molding a surface form of a three-dimensional curved surface having a high deep-drawing degree, there has been the problem that insufficient following of a sheet for decoration toward an irregular form of a metal die allows the sheet for decoration to be broken by the temperature and shock of an injection resin when injected the injection resin.

Patent document 1: Japanese Patent No. 2690258
Patent document 2: Japanese Patent No. 2965973

### BRIEF DESCRIPTION OF THE DRAWINGS

Fig. 1 is a schematic drawing showing a cross section of the sheet for decoration of the present invention.
Fig. 2 is a graph showing a dynamic elastic modulus of a PET film used in Example 1.
Fig. 3 is a graph showing a dynamic elastic modulus of a PET film used in Comparative Example 1.

### EXPLANATION OF THE CODES

- 10: Sheet for decoration
- 11: Base film
- 12: Peel layer
- 13: Picture layer
- 14: Heat adhesive resin layer

### DISCLOSURE OF THE INVENTION

In light of the situation described above, an object of the present invention is to provide a sheet for decoration which is excellent in an impact resistance in molding a surface form having a three-dimensional curved surface having a high deep-drawing degree and which has a good followability toward a molding surface of a metal die and is suited to decorated moldings.

Intensive researches repeated by the present inventors in order to achieve the object described above have resulted in finding that the object described above can be achieved by allowing a dynamic elastic modulus of a base sheet comprising a polyester film to fall in a prescribed range. The present invention has been completed based the above knowledge.
That is, the present invention comprises the following essential points.
1. A sheet for decoration comprising a peel layer, a picture layer and a heat adhesive resin layer which are laminated in order on the surface of a base film comprising a polyester film, wherein a dynamic elastic modulus of the above base film is 1.0 X 10⁶ Pa or more at any temperature falling in a range of 190 to 240°C.
2. The sheet for decoration as described in the above item 1, wherein a resin constituting the polyester film described above is polyethylene terephthalate.
3. The sheet for decoration as described in the above item 1 o 2, wherein it is used for transfer decorating injection molding.

According to the present invention, capable of being provided is a sheet for decoration which is excellent in an impact resistance in molding a surface form having a three-dimensional curved surface having a high deep-drawing degree and which has a good followability toward a molding surface of a metal die and is suited to decorative moldings.

### BEST MODE FOR CARRYING OUT THE INVENTION

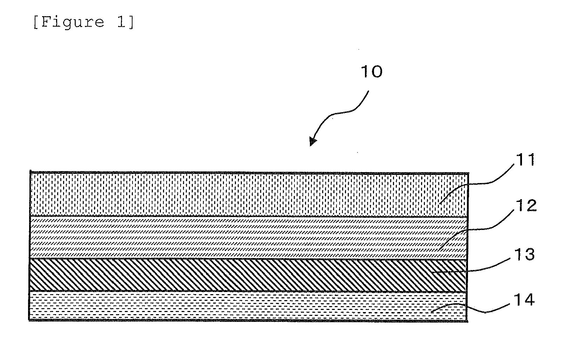

The present invention shall be explained below with reference to the drawings. Fig. 1 is a schematic drawing showing a cross section of the sheet for decoration of the present invention.
As shown in Fig. 1, the sheet for decoration 10 of the present invention comprises a peel layer 12, a picture layer 13 and a heat adhesive resin layer 14 which are laminated in order on the surface of a base film 11 comprising a polyester film, and it is a sheet for decoration which is excellent in an impact resistance in molding a surface form having a three-dimensional curved surface having a high deep-drawing degree and which has a good followability toward a molding surface of a metal die and is suited to decorative moldings. In this regard, "deep-drawing" means a form in which an area ratio of after molding to before molding in a sheet for decoration is 130 % or more, and "a high deep-drawing degree" means that the above area ratio is large.

### Base film:

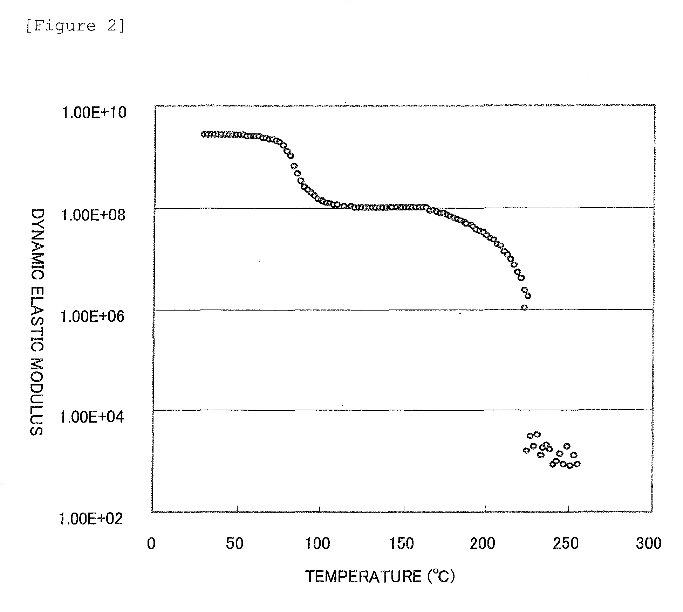

The base film 11 according to the present invention comprises a polyester film, and a dynamic elastic modulus thereof has to be 1.0 × 10⁶ Pa or more at any temperature falling in a range of 190 to 240°C. In this regard, "a dynamic elastic modulus thereof is 1.0 × 10⁶ Pa or more at any temperature falling in a range of 190 to 240°C" dose not mean that the dynamic elastic modulus has to be 1.0 × 10⁶ Pa or more at the whole temperature range described above. As shown in, for example, Fig. 2, if the dynamic elastic modulus is continuously 1.0 × 10⁶ Pa or more at least at a part of a range of 190 to 240°C, it may be 1.0 × 10⁶ Pa or less in a range of 230 to 240°C.

The dynamic elastic modulus shows a deformability and a flowability of a polymer and can be measured with a good repeatability. A measuring method of the dynamic elastic modulus is usually known well, and it is measured, for example, by determining a shift in a frequency which is brought about by giving vibration to a thermally molten resin at a constant frequency by means of a measuring instrument called a rheometer. To be more specific, a polymer is molten at a prescribed temperature, and then a rotor is vibrated at a prescribed frequency while lowering the temperature to record a temperature-dynamic elastic modulus curve, whereby dynamic elastic moduli at the respective temperatures are measured.

The polyester base resin constituting the polyester film according to the present invention shows polymers having an ester group which are obtained from polyvalent carboxylic acids and polyhydric alcohols by polycondensation. The polyvalent carboxylic acids include terephthalic acid, isophthalic acid, phthalic acid, 2,6-naphhtalenedicarboxylic acid, adipic acid, sebacic acid, decanedicarboxylic acid, azelaic acid, dodecadicarboxylic acid, cyclohexanedicarboxylic acid and the like. The polyhydric alcohols include ethylene glycol, propanediol, butanediol, pentanediol, hexanediol, neopentyl glycol, 1,4-cyclohexanedimethanol, decanediol, 2-ethyl-butyl-1-propanediol, bisphenol A and the like. Further, the polyester base resin used in the present invention may be copolymers of three or more kinds of polyvalent carboxylic acids and polyhydric alcohols and may be copolymers with monomers and polymers such as diethylene glycol, triethylene glycol, polyethylene glycol and the like.

The above polyester base resin includes preferably polyethylene terephthalate (PET), polybutylene terephthalate and the like, and polyethylene terephthalate (PET) is particularly preferred. The above polyester base resin may be a homopolymer or a copolymer or may be a polymer obtained by polymerizing with a third component. For example, a film obtained by using a copolymer includes a polyester film obtained by blending a polyester base resin comprising polyethylene terephthalate which is usually excellent in a heat resistance and a dimensional stability as a principal component (usually 90 mole % or more, preferably 95 mole % or more) with a polyester base resin comprising polybutylene terephthalate which is usually excellent in a moldability as a principal component (usually 90 mole % or more, preferably 95 mole % or more). A blending ratio thereof may suitably be selected according to a dynamic elastic modulus of the film obtained, and it is usually 70/30 to 95/5, preferably 75/25 to 85/15. The polyester film thus obtained is excellent in a heat resistance, a dimensional stability and a moldability and therefore can suitably be used as the base sheet of the present invention. The polyester film comprising the above polyester base resins may be used in a single sheet or in a laminate of plural sheets.

The polyester film contains preferably fine particles for the purpose of improving a workability. The fine particles include inorganic particles of calcium carbonate, magnesium carbonate, calcium sulfate, barium sulfate, lithium phosphate, magnesium phosphate, calcium phosphate, aluminum oxide, silicon oxide, kaoline and the like, organic particles comprising acryl base resins and the like, internal deposited particles and the like. An average particle diameter of the fine particles is preferably 0.01 to 5.0 µm, more preferably 0.05 to 3.0 µm, and a content of the fine particles in the polyester base resin is preferably 0.01 to 5.0 mass %, more preferably 0.1 to 1.0 mass %.
Further, the polyester film may contain, if necessary, various stabilizing agents, lubricants, antioxidants, antistatic agents, defoaming agents, fluorescent brightening agents and the like.
The polyester film used in the present invention has a thickness of usually 10 to 150 µm, preferably 10 to 125 µm and more preferably 10 to 75 µm.

The polyester film used in the present invention is produced, for example, in the following manner. First, the polyester base resin described above and the other raw materials are supplied to a known melt extruding equipment such as an extruder, and they are molten by heating at a temperature higher than a melting point of the above polyester base resin, whereby a molten polymer is obtained. Then, the molten polymer is quickly cooled and solidified on a rotary cooling drum while extruding so that the temperature is lower than a glass transition temperature of the polymer, whereby a non-oriented sheet staying in a substantially amorphous state is obtained. This sheet is stretched in a biaxial direction and turned into a film, and the film is subjected to thermal fixing, whereby a polyester film is obtained. In this case, the stretching method may be either sequential biaxial stretching or simultaneous biaxial stretching. Further, the sheet may be stretched again, if necessary, in vertical and/or horizontal directions before or after subjected to thermal fixing. In the present invention, the stretching magnification is preferably 7 times or less, more preferably 5 times or less and further preferably 3 times or less in terms of an area magnification in order to obtain the satisfactory dimensional stability. If the stretching magnification falls in the above range, when the polyester film obtained is used for a sheet for decoration, the sheet for decoration does not shrink again in a temperature range in injecting the injection resin, and the film strength required in the above temperature range can be obtained. The polyester film may be the film produced in the manner described above or a commercial film.

### Peel layer:

The peel layer 12 is provided in order to make it easy to peel a transfer layer comprising the peel layer 12, the picture layer 13 and the heat adhesive resin layer 14 from the base sheet 11 and function as a protective layer for the picture layer after transferring the above transfer layer onto the injection resin. The presence of the above peel layer makes it possible to transfer the transfer layer surely and readily onto a transferee from the sheet for decoration of the present invention. The peel layer can be formed by using, for example, waxes such as microcrystalline wax, carnauba wax, paraffin wax, Fisher-Tropsch wax, various low molecular polyethylenes, Japan tallow, beeswax, whale wax, privet wax, wool wax, shellac wax, candelilla wax, petrolatum, partially modified waxes, fatty acid esters, fatty acid amides and the like and thermoplastic resins such as silicone wax, silicone base resins, fluorine base resins, acryl base resins, polyester base resins, polyurethane base resins, cellulose base resins, vinyl chloride-vinyl acetate base copolymer resins, nitrocellulose and the like.

Further, the peel layer can be formed as well by using a binder resin and a releasing material. The binder resin includes acryl base resins such as polymethyl methacrylate, polyethyl methacrylate, polybutyl methacrylate and the like which are thermoplastic resins, vinyl base resins such as polyvinyl acetate base resins, polyvinyl chloride-polyvinyl acetate base copolymer resins, polyvinyl alcohol, polyvinyl butyral and the like, cellulose derivatives such as ethyl cellulose, nitrocellulose, cellulose acetate and the like and unsaturated polyester base resins, polyester base resins, polyurethane base resins, aminoalkyd base resins and the like which are thermosetting resins. Also, the releasing material includes waxes, silicone waxes, silicone base resins, melamine base resins, fluorine base resins, fine powders of talc and silica and lubricants such as surfactants and metal soaps. A content of the releasing material per 100 mass parts of the binder resin is preferably 1 to 10 mass parts, more preferably 3 to 5 mass parts. The peel layer can be formed by dissolving or dispersing the necessary materials described above in a suitable solvent to prepare a coating liquid for the peel layer and coating the above liquid on the base material by means of a gravure print method, a screen print method or a reverse coating method using a photogravure and then drying it. A thickness thereof after drying is usually 0.1 to 10 µm, preferably 1 to 5 µm.

### Release layer:

In the sheet for decoration of the present invention, a release layer can be provided, if necessary, between the base sheet 11 and the peel layer 12. The release layer is provided when a releasing property of the transfer layer is not satisfactory in thermal transferring depending on combination of the materials for the base sheet 11 and the peel layer 12. The above release layer can be formed as well by using a release agent such as waxes, silicone waxes, silicone base resins, fluorine base resins and the like, or hydrophilic resins described in Japanese Patent Application Laid-Open No. 142988/1992, various curing resins and the like which are suitably selected according to the characteristics of the base sheet and the transfer layer can be used as well to form the release layer. The release layer can be formed by dissolving or dispersing the release agent containing the necessary additives described above in a suitable solvent to prepare an ink and coating it on the base sheet 11 by publicly known means and drying. A thickness thereof is preferably about 0.1 to 5 µm.

### Picture layer:

The picture layer 13 according to the present invention is a layer for expressing designs, characters and pattern-shaped pictures. The pictures of the picture layer 13 are optional, and capable of being given pictures comprising, for example, wood grains, marble grains, texture grains, sand patterns, geometric patterns, characters and the like. In the picture layer 13, a picture pattern layer and a whole solid layer which express the pictures described above can be provided alone or in combination. The whole solid layer can be used usually as a masking layer, a coloring layer, a coloring masking layer or the like. Usually, the picture layer 13 is formed on the release layer 12 described above by a publicly known printing method such as gravure printing using a print ink, offset printing, silk screen printing, transfer printing transferred from a transfer sheet, sublimation transfer printing, ink jet printing and the like, whereby it is formed between the release layer 12 and the adhesive layer 14 as shown in Fig. 1. A thickness of the picture layer 13 is preferably 5 to 40 µm, more preferably 20 to 30 µm from the viewpoint of the design.

Polyester base resins, polyurethane base resins, acryl base resins, vinyl acetate base resins, vinyl chloride-vinyl acetate base copolymer resins, cellulose base resins and the like can preferably be given as a binder resin of the print ink used for forming the picture layer 13. The binder resin comprises preferably the acryl base resin alone or the mixture of the acryl base resin and the vinyl chloride-vinyl acetate base copolymer resin as a main component. Among them, the acryl base resin, the vinyl chloride-vinyl acetate base copolymer resin or the mixture thereof with another acryl base resin is preferred since the printing aptitude and the molding aptitude are more improved. In this regard, the acryl base resin includes acryl base resins such as polymethyl (meth)acrylate, polyethyl (meth)acrylate, polybutyl (meth)acrylate, methyl (meth)acrylate-butyl (meth)acrylate copolymers, methyl (meth)acrylate-styrene copolymers and the like (in the above case, (meth)acrylate shows acrylate or methacrylate) and acryl resins modified with fluorine and the like. They can be used alone or in a mixture of two or more kinds thereof. In addition thereto, capable of being used as well are acryl polyols obtained by copolymerizing (meth)acrylic acid alkyl esters such as methyl (meth)acrylate, ethyl (meth)acrylate, butyl (meth)acrylate, 2-ethylhexyl (meth)acrylate, octyl (meth)acrylate and the like with (meth)acrylic acid esters having a hydroxyl group in a molecule such as 2-hydroxyethyl (meth)acrylate, 2-hydroxybutyl (meth)acrylate, 2-hydroxy-3-phenoxypropyl (meth)acrylate and the like. Further, resins having a vinyl acetate content of about 5 to 20 mass % and an average polymerization degree of about 350 to 900 are usually used as the vinyl chloride-vinyl acetate base copolymer resin. The vinyl chloride-vinyl acetate base copolymer resin may be further copolymerized, if necessary, with carboxylic acid such as maleic acid, fumaric acid and the like. A mixing ratio of the acryl base resin to the vinyl chloride-vinyl acetate base copolymer resin is the acryl base resin/the vinyl chloride-vinyl acetate base copolymer resin = about 1/9 to 9/1 (mass ratio). In addition thereto, other resins, for example, reins such as thermoplastic polyester base resins, thermoplastic urethane base resins and chlorinated polyolefin base resins such as chlorinated polyethylene, chlorinated polypropylene and the like may suitably be mixed, if necessary, as an accessory component.

A colorant used for the picture layer 13 according to the present invention includes metallic pigments comprising scale-shaped flake powders of metals, alloys and metal compounds of aluminum, chromium, nickel, tin, titanium, iron phosphide, copper, gold, silver, brass and the like, pearl pigments comprising flake powders of mica-shaped iron oxide, titanium dioxide-covered mica, titanium dioxide-covered bismuth oxychloride, bismuth oxychloride, titanium dioxide-covered talc, argentine, colored titanium dioxide-covered mica, basic lead carbonate and the like, fluorescent pigments such as strontium aluminate, calcium aluminate, barium aluminate, zinc sulfide, calcium sulfide and the like, white inorganic pigments such as titanium dioxide, zinc oxide, antimony trioxide and the like, inorganic pigments such as zinc oxide, iron oxide red, vermilion, ultramarine blue, cobalt blue, titan yellow, chrome yellow, carbon black and the like and organic pigments (including dyes) such as isoindolinone yellow, Hansa yellow A, quinacridone red, permanent red 4R, phthalocyanine blue, indathrene blue RS, aniline black and the like. They can be used alone or in a mixture of two or more kinds thereof.

The above picture layer 13 is a layer provided in order to impart the sheet for decoration of the present invention with a design property, and a metal thin film layer and the like may be provided thereon for the purpose of enhancing the design property. The metal thin film layer can be formed by a method such as vacuum vapor deposition, sputtering and the like using metal such as aluminum, chromium, gold, silver and the like. The above metal thin film layer may be provided on the whole surface or partially in a pattern form.
Precipitation preventives, curing catalysts, UV absorbers, antioxidants, leveling agents, thickeners, defoaming agents, lubricants and the like in addition to the components described above can suitably be added to the print ink used for forming the picture layer 13. The print ink is provided usually in a form in which the components described above are dissolved or dispersed in a solvent. The solvent may be any one as long as the binder resin is dissolved or dispersed therein, and organic solvents and/or water can be used. The organic solvents include hydrocarbons such as toluene, xylene and the like, ketones such as acetone, methyl ethyl ketone and the like, esters such as ethyl acetate, cellosolve acetate, butyl cellosolve acetate and the like and alcohols.

### Heat adhesive resin layer:

The heat adhesive resin layer 14 according to the present invention is formed in order to transfer the transfer layer onto a decorated molding with a good adhesive property. A resin used for the above heat adhesive resin layer 14 includes, for example, acryl base resins, vinyl chloride base resins, vinyl acetate base resins, vinyl chloride-vinyl acetate base copolymer resins, styrene-acryl base copolymer resins, polyester base resins, polyamide base resins and the like. The heat adhesive resin layer 14 can be formed by using at least one of the above resins to prepare a solution or an emulsion which can be coated and coating and drying it by a suited method selected from the coating methods given in the peel layer described above. A thickness thereof is preferably about 0.1 to 5 µm.

Capable of being used for the heat adhesive resin layer 14 are the resins described above, organic UV absorbers such as benzophenone base compounds, benzotriazole base compounds, oxalic acid anilide base compounds, cyanoacrylate base compounds, salicylate base compounds and the like and additives of inorganic fine particles having a UV absorbing ability such as oxides of zinc, titanium, cerium, tin, iron and the like. Further, colored pigments, white pigments, extender pigments, fillers, antistatic agents, antioxidants, fluorescent brightening agents and the like can suitably be used as well, if necessary, as additives.

### Production processes: sheet for decoration and decorated molding

The sheet for decoration of the present invention is formed by laminating the peel layer 12, the picture layer 13 and the heat adhesive resin layer 14 on the surface of the base film 11 comprising a polyester film by a publicly known printing or coating means such as gravure printing, roll coating and the like. When the picture layer 13 comprises plural layers, for example, when the picture layer 13 comprises combination of a picture pattern layer and a whole solid layer as described above, one layer is laminated and then dried, and subsequently the other layer is laminated.

The sheet for decoration of the present invention obtained in the manner described above is suitably used for transfer decorating injection molding. In the transfer decorating injection molding, a transfer layer side of the sheet for decoration for transfer decorating injection molding is turned to an inside of a metal die and heated from the transfer layer side by a hot plate to carry out preliminarily molding so that the above sheet for decoration fits the shape of the metal die to thereby bring the sheet for decoration into close contact with the inner face of the metal die, and the metal die is clamped. In this case, the heating temperature falls preferably in a range of not lower than the vicinity of a glass transition temperature of the base sheet and lower than the melting temperature (or melting point). It is more preferably the vicinity of the glass transition temperature. The vicinity of the glass transition temperature described above shows a range of the glass transition temperature ± 5°C, and it is, though depending on the resin constituting the polyester film of the base sheet, usually about 70 to 130°C.

Then, an injection resin described later is molten and injected into the cavity, and the above sheet for decoration is integrated with the injection resin. When the injection resin is a thermoplastic resin, the above injection resin is turned into a fluid state by heating and melting, and when the injection resin is a thermosetting resin, the uncured injection resin is injected at room temperature or in a fluid state by suitably heating and solidified by cooling. This allows the sheet for decoration to be integrated with a formed resin molding and adhered thereon, whereby a decorated molding is obtained. A heating temperature of the injection resin is, though depending on the injection resin, usually about 180 to 240°C.

The decorated molding thus obtained is taken out from the metal die after cooled, and then the base film is peeled off, whereby the decorated molding on which the transfer layer comprising the peel layer, the picture layer and the heat adhesive resin layer is transferred is obtained.

### Production process: injection resin

The injection resin used for the decorated molding shall not specifically be restricted as long as it is a thermoplastic resin or a thermosetting resin (including a two liquid type curable resin) which can be injection-molded, and various resins can be used therefor. The above thermoplastic resin material includes, for example, vinyl base polymers such as polyvinyl chloride, polyvinylidene chloride and the like, styrene base resins such as polystyrene resins, acrylonitrile-styrene base copolymer resins, ABS base resins (acrylonitrile-butadiene-styrene base copolymer resins) and the like, acryl base resins such as polymethyl (meth)aorylate, polyethyl (meth)acrylate, polyacrylonitrile and the like, polyolefin base resins such as polyethylenes, polypropylenes, polybutenes and the like, polyester base resins such as polyethylene terephthalate, ethylene glycol-terephthalic acid-isophthalic acid base copolymer resins, polybutylene terephthalate and the like, polycarbonate resins and the like. Further, the thermosetting resin includes polyurethane base resins of a two liquid reaction curing type, epoxy base resins and the like. The above resins may be used alone or in a mixture of two or more kinds thereof.
Further, added to the above resins are, if necessary, various additives, for example, antioxidants, UV absorbers, light stabilizing agents, flame retardants, plasticizers, inorganic powders of silica, alumina, calcium carbonate, aluminum oxide and the like, filler such as wooden powders, glass fibers and the like, lubricants, release agents antistatic agents, colorants and the like. The injection resin may be a resin colored by suitably adding a colorant according to uses. The same publicly known colorants as the colorants which can be used for the base film described above can be used for the colorant.
A thickness of the injection resin molding constituting the decorated molding shall not specifically be restricted and is selected according to the uses of the above decorated molding, and it is usually 1 to 5 mm, preferably 2 to 3 mm.

### EXAMPLES

The present invention shall be explained below in further details with reference to examples and comparative examples, but the present invention shall by no means be restricted by these examples.

### Example 1

### (1) Production of sheet for decoration

A coating liquid comprising an acryl resin as a binder resin and a silicone base resin as a releasing material was used to carry out gravure printing on a biaxially stretched PET film having a thickness of 75 µm and a dynamic elastic modulus shown in Fig. 2 at a coating amount of 4 g/m² to form a peel layer, and an acryl base print ink was used to carry out gravure printing of wood grain patterns at a coating amount of 8 g/m² to form a picture layer. Further, a coating liquid of an acryl resin base was coated thereon in a thickness of 4 µm to form a heat adhesive resin layer, whereby a sheet for decoration was obtained.

### (2) Production of decorated molding

The sheet for decoration obtained in (1) described above was heated at a hot plate temperature of 150°C to carry out molding so that the sheet for decoration fit a shape in an inside of a metal die for injection molding to thereby bring the sheet for decoration into close contact with the inner face of the metal die. Used was the metal die of a form having a high deep drawing degree which had a size of 80 mm square and a rise of 10 mm and in which a corner part had a tray form of 3 R. On the other hand, an ABS resin (trade name: "Kralastic Myth-2", manufactured by NIPPON A & L INC.) was used as an injection resin and molten at 230°C, and then it was injected into a cavity. The metal die was cooled down, and after a molding was taken out from the metal die, the base sheet was peeled off therefrom to thereby obtain a decorated molding in which the transfer layer comprising the peel layer, the picture layer and the heat adhesive resin layer was transferred and formed on a surface. It was found that the above decorated molding was good and that the sheet for decoration of the present invention was not broken in molding a surface form having a three-dimensional curved surface having a high deep drawing degree and had a good followability toward a molding surface of the metal die.

### Comparative Example 1

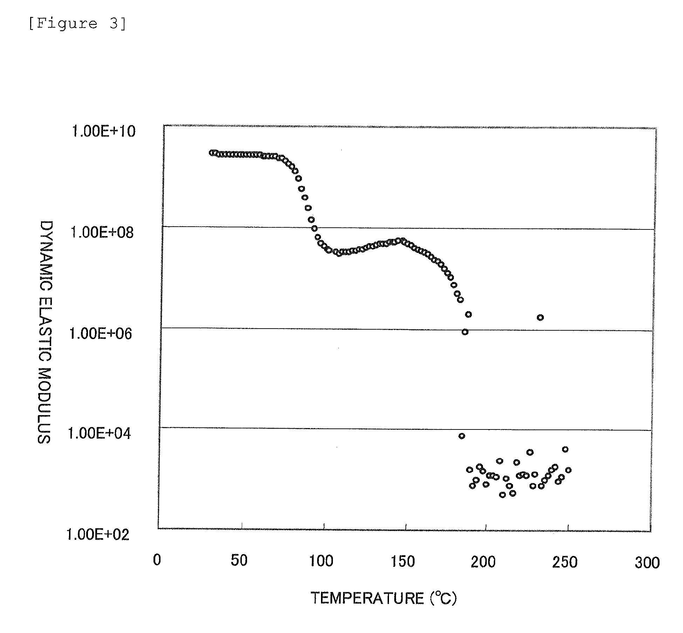

A sheet for decoration was obtained in the same manner as in Example 1, except that the PET film used in Example 1 was changed to a PET film having a dynamic elastic modulus shown in Fig. 3, and the above sheet for decoration was used to produce a decorated molding. The decorated molding was taken out to find that the sheet for decoration was broken and that the injection resin leaked out from the broken part to make it impossible to peel the base sheet.

### INDUSTRIAL APPLICABILITY

The sheet for decoration of the present invention is suitably used for various decorated moldings.

## Claims

1. A sheet for decoration comprising a peel layer, a picture layer and a heat adhesive resin layer which are laminated in order on the surface of a base film comprising a polyester film, wherein a dynamic elastic modulus of the above base film is 1.0 × 10⁶ Pa or more at any temperature falling in a range of 190 to 240°C.

2. The sheet for decoration as described in claim 1, wherein a resin constituting the polyester film described above is polyethylene terephthalate.

3. The sheet for decoration as described in claim 1 or 2, wherein it is used for transfer decorating injection molding.
